# EUROPEAN PATENT APPLICATION

(11) **EP 4 799 754 A1**
(43) Date of publication of application: **02.09.2026**
(21) Application number: 25227571.4
(22) Date of filing: 30.12.2025
(51) Int. Cl.: B23P 19/06, B25J 15/00

(54) **END-EFFECTOR WITH CLUTCH AND END-EFFECTOR OPERATING METHOD**

(30) Priority: 28.02.2025 US 202563765436 P
(71) Applicant: Centrix AeroSpace LLC, Kent, Washington 98032 (US)
(72) Inventor: Ralphs, Cameron, Kent, 98032 (US)
(74) Representative: DTS Patent- und Rechtsanwälte PartmbB

(57) **Abstract**

An end-effector system and method. The end-effector includes, in one example, a clutch mechanism configured to in an unlocked configuration, permit rotation between a body and a socket in response to an absence of a force applied to a drive shaft and in a locked configuration, inhibit rotation between the body and the socket in response to a force applied to the drive shaft. In the end-effector, the clutch mechanism includes a first set of plates that are coupled to the body and a second set of plates that are coupled to the socket.

## Description

### CROSS-REFERENCE TO RELATED APPLICATION

The present application claims priority to U.S. Provisional Application No. 63/765,436, entitled "END-EFFECTOR WITH CLUTCH AND END-EFFECTOR OPERATING METHOD", and filed on February 28, 2025. The entire contents of the above-listed application are hereby incorporated by reference for all purposes.

### FIELD

The present description relates generally to an end-effector with a clutch for angularly adjusting a socket.

### BACKGROUND AND SUMMARY

Many manufacturing fields use end-effectors for installing and uninstalling fasteners that secure multiple work pieces to one another, in industries such as the aerospace industry. The end-effectors may be specifically used in automated manufacturing processes where the end-effectors are robotically controlled. Certain robotic end-effectors require clocking the counter-rotation shapes on the fastener body and a socket of the end-effector. Specifically, in certain manufacturing processes, when attempting to uninstall a clamped fastener, the socket is clocked to the fastener, since the fastener is clamped in a fixed position. Robotic end-effectors are often constrained in their ability to rotate.

The inventors have therefore recognized that an auto-clocking end-effector that can handle the socket rotation would be desirable. Robotic end-effectors that have continuous angular adjustability may be particularly advantageous to enable the end-effector to accommodate for a wide variety of clocking adjustments that may be needed during manufacturing.

Facing the aforementioned challenges, the inventors developed an end-effector to at least partially overcome the challenges. The end-effector includes, in one example, a clutch mechanism configured to, in an unlocked configuration, permit rotation between a body and a socket in response to an absence of a force applied to a drive shaft and in a locked configuration, inhibit rotation between the body and the socket in response to a force applied to the drive shaft. The clutch mechanism includes a first set of plates that are coupled to the body and a second set of plates that are coupled to the socket. In this way, the end-effector may be efficiently clocked to a fastener body, via a robotic process, if desired. Consequently, customer appeal of the end-effector is increased.

In another example, the first set of plates is splined to the body and the second set of plates is splined to the socket. In this way, the clutch plates are able to axially translate with regard to the socket and the body in a space efficient package.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

FIGS. 1A-1B show a first example of an end-effector in an unlocked and locked configuration, respectively.
FIGS. 2-5 show different views of a lock collar sub-assembly included in the end-effector, depicted in FIGS. 1A-1B.
FIGS. 6-7 show different views of a socket sub-assembly included in the end-effector, depicted in FIGS. 1A-1B.
FIGS. 8-10 show different views of a body included in the end-effector, depicted in FIGS. 1A-1B.
FIGS. 11-14 show different views of a clutch mechanism included in the end-effector, depicted in FIGS. 1A-1B.
FIGS. 15-20 show different views of another example of an end-effector with a clutch.
FIGS. 21-22 show a robotic component.
FIGS. 23-24 show an example of a fastener that may be used in conjunction with any of the end-effectors described herein.

### DETAILED DESCRIPTION

A friction clutch end-effector is described herein that achieves continuous angular adjustability that enables the end-effector to efficiently clock a socket of the effector to a fastener body. In this way, the end-effector may be operated with auto-clocking functionality if desired, thereby increasing customer appeal.

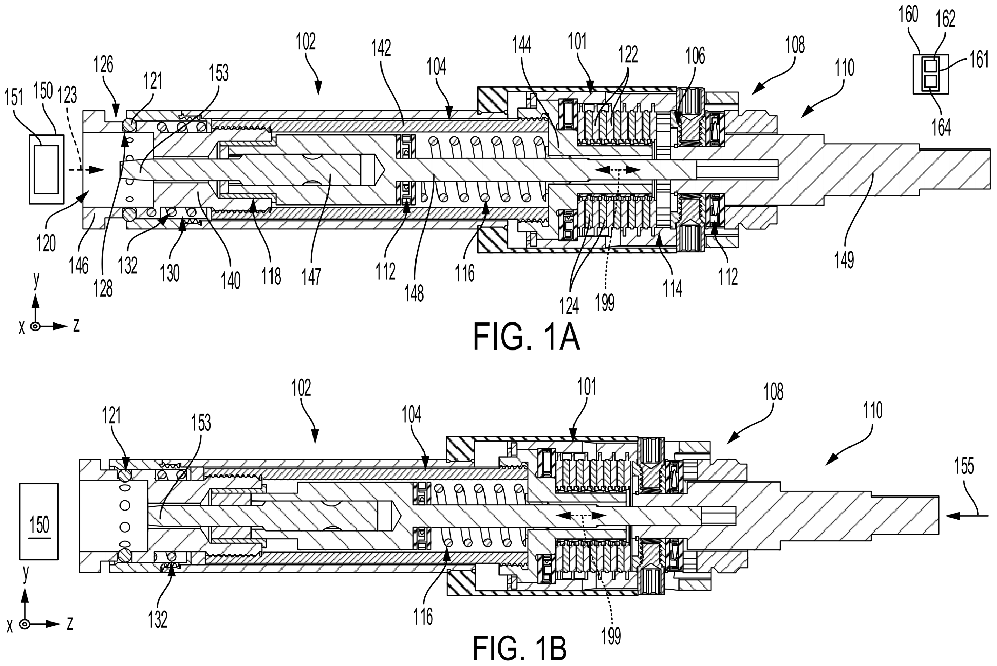

FIGS. 1A-1B show an end-effector 100 in an unlocked configuration and a locked configuration, respectively. In a locked configuration, the end-effector 100 locks a socket 104 such that socket rotation is inhibited. Conversely, in an unlocked configuration, the end-effector 100 allows the transfer of torque from the drive shaft 110 to the socket 104 thereby enabling socket rotation. However, there is no direct mechanism to transfer torque from the drive shaft to the socket aside from internal friction (which is comparatively small). In certain cases, the internal friction may not be high enough to reliably or accurately rotate the socket with the drive shaft. Therefore, the end effector may be operated to push the socket over the fixed fastener with the end effector in the unlocked (socket free to rotate) configuration. If the socket and the fastener body anti-rotation feature are not aligned (i.e., clocked), the free spinning socket may rotate as desired to accommodate the fastener. In one use-case scenario, the internal friction mechanism of torque transfer may initially be used to assist in biasing the socket into a comparatively small amount of desired rotation and then the end effector (in an unlocked configuration) may be operated to push the socket over the fixed fastener and the free spinning socket may rotate as desired to achieve a desired alignment with the fastener. A clutch mechanism 101 that is included in the end-effector 100 and discussed in greater detail below, provides the aforementioned functionality.

The end-effector 100 includes a lock collar 102, the socket 104, a drive thrust bearing 106, a body 108, the drive shaft 110, thrust bearings 112 (e.g., needle roller thrust bearings), clutch plates 114 (e.g., friction plates), a spring 116 (e.g., a coil spring), and self-lubricating bushings 118 positioned between the socket 104 and the drive shaft 110. The self-lubricating bushings 118 allow the socket 104 to rotate relative to the drive shaft 110. The use of bushings allows the longevity of the end-effector to be increased in comparison to other types of bearings. However, alternate end-effector constructions have been contemplated.

The spring 116 functions to push the lock collar 102 back to an unlocked position which in turn pushed the thrust bearing 112 away from the clutch plates 114 (e.g., friction plates). The thrust bearing 112 is enclosed by the body 108 in the illustrated example. In this way, the thrust bearing is protected. However, other thrust bearing arrangements have been contemplated.

The socket 104 includes locking bearings 121 incorporated onto a wall 126 that forms a boundary of a recess 120 that mates with a portion of the fastener 150 during operation. In the position shown in FIG. 1A, the bearings 121 are positioned in recesses 128 of the lock collar 102 and allow the fastener to be retained in the socket. To elaborate, the fastener may be selectively locked in the socket via the bearings 121 (e.g., ball bearings) and therefore is unable to be pulled out of the socket due to the position of the bearings. The bearings 121 and socket 104 are in an unlocked configuration in FIG. 1A. On the other hand, in the position shown in FIG. 1B, the bearings and socket more generally are moved upward into the lock collar 102 to lock the fastener into the socket. In this way, the bearings 121 function to lock and unlock the fastener from being pulled out of the socket 104. As such, when an axial force 123 is applied to the lock collar 102, the fastener 150 is locked therein via the bearings 121. Further, in the illustrated example, the bearings 121 are circumferentially arranged around the lock collar 102. However, other bearing arrangements are possible, such as one or two sets of bearings that are arranged 180° apart with regard to the central axis 199. Thus, when locked, the socket may be used to remove a fastener from a hole. For instance, even if the fastener is unclamped, the fastener may still demand a relatively large amount of force to pull out of the workpiece due to the profile of the workpiece through which it is inserted. Thus, the socket is able to function to locked on the fastener so that the fastener is able to be pulled out of the workpiece.

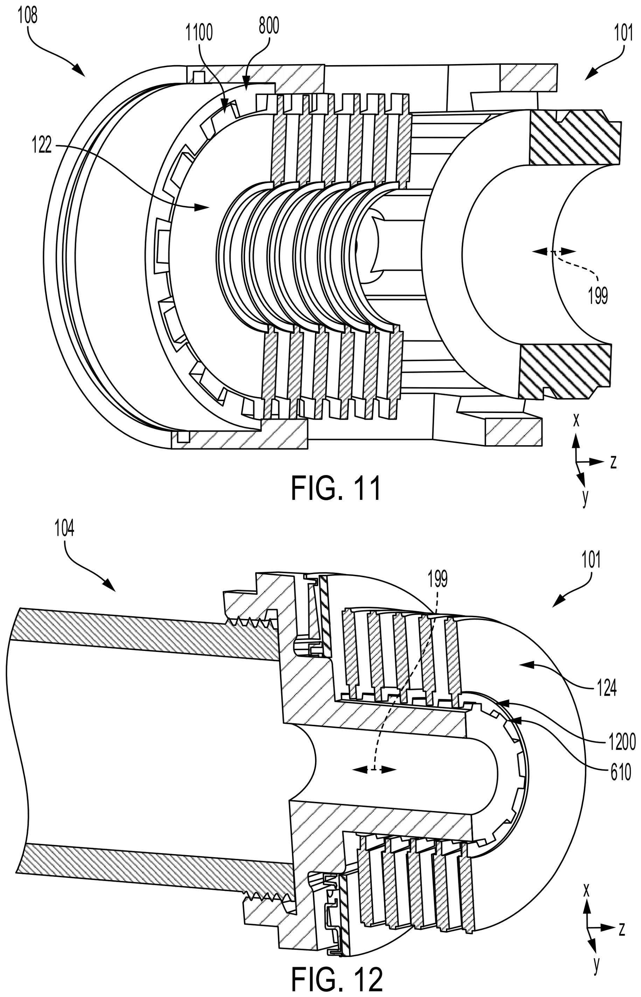

As shown in FIG. 1A the clutch mechanism 101 includes the clutch plates 114. These plates may be conceptually divided into a set of plate 122 that are splined or otherwise coupled to the body 108 and a set of plates 124 that are similarly splined or otherwise coupled to the socket 104. The clutch mechanism is described in greater detail herein with regard to FIGS. 11-14.

Additionally, the socket 104 includes a lower section 140, a middle section 142, and an upper section 144 that threadingly engaged with one another, in the illustrated example. The socket 104 further includes a fastener interface section 146 that is profiled to receive the fastener 150. The drive shaft 110 may also be divided into a lower section 147, a middle section 148, and an upper section 149. However, other fastener architectures have been envisioned.

The end-effector 100 is shown interacting with the fastener 150. It will be understood that the same actuation that locks socket rotation also locks the fastener 150 in a recess 120 of the socket 104. Further, a forward force is applied to the drive shaft 110 (as indicated via arrow 155, depicted in FIG. 1B) that pushes the lock collar 102 forward, locking the ball bearings 121, thereby inhibiting movement of the socket 104. Additionally, a spring 132 returns the lock collar 102 to unlocked position, shown in FIG. 1A, when the force against the drive shaft 110 is released. To elaborate, when the clutch mechanism 101 is disengaged the socket 104 may be rotated with regard to the lock collar 102 to clock the recess 120 in the socket 104 to a body 151 of the fastener 150. Once the socket 104 is clocked to the fastener body 151 the downward force may then be applied to the drive shaft 110 to inhibit rotation of the socket 104 with regard to the body 108 via the clutch mechanism 101. While the clutch mechanism is locked, an extension 153 (e.g., a polygonal extension) can then be used to drive fastener clamping and unclamping while the socket 104 holds the fastener body stationary. The spring 132 may be arranged in a region 130 between the lock collar 102 and the socket 104.

FIG. 1A further shows a manufacturing machine 160 (e.g., robotic machine which may be automated) that may be used to manipulate the end-effector 100. The manufacturing machine 160, illustrated in FIG. 1A, may include one or more computing device(s) 161 with a processor 162 and memory 164 (e.g., non-transitory memory) storing instructions executable by the processor. The manufacturing machine 160 may further include tooling attachments, arms, carriages, other suitable robot devices, and the like, for manipulating the end-effector as well as performing other manufacturing operations. The other end-effectors illustrated herein may be manipulated using a similar manufacturing machine.

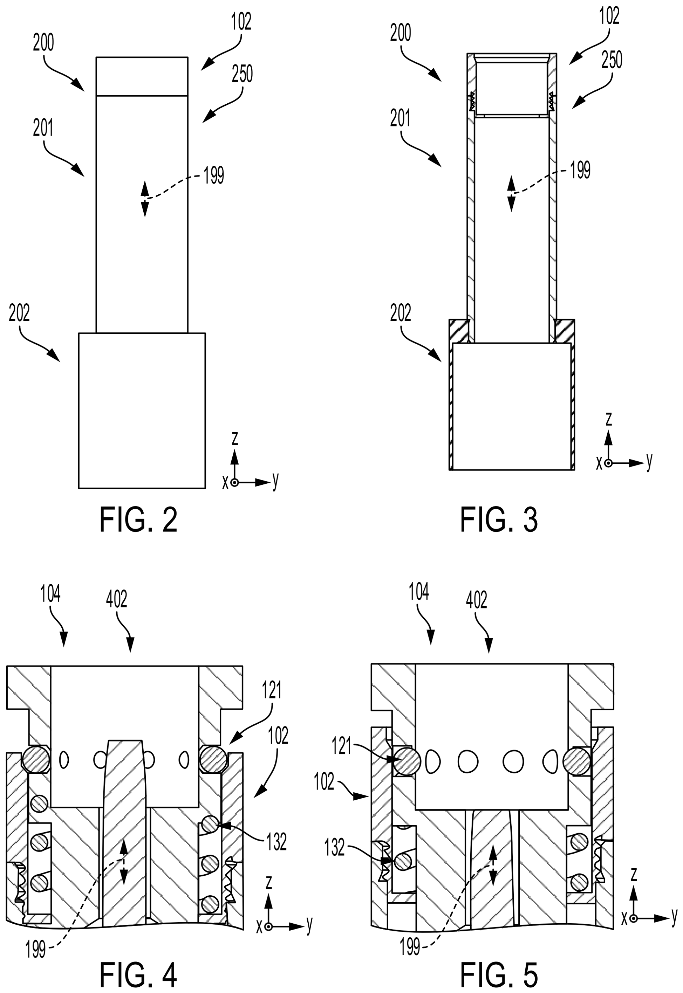

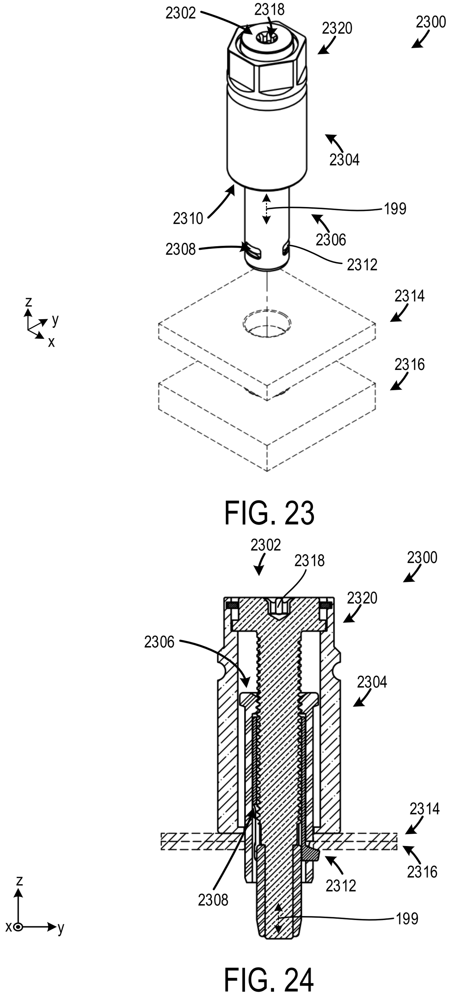

An axis system is provided in FIGS. 1A-1B as well as FIGS. 2-24, for reference. The z-axis may be a vertical axis (e.g., parallel to a gravitational axis), the x-axis may be a lateral axis (e.g., horizontal axis), and/or the y-axis may be a longitudinal axis, in one example. However, the axes may have other orientations, in other examples. Further, a central axis 199 of the end-effector 100 depicted in FIGS. 1A-1B as well as the end-effectors and devices depicted in FIGS. 2-22 as well as the fastener depicted in FIGS. 23-24, for reference. Further, above and below as discussed herein may refer to relative proximal and distal positions in the end-effector. However, it will be appreciated that the fastener's central axis may or may not be aligned with a gravitational axis in different installation orientations.

FIGS. 2-3 show detailed views of the lock collar 102 and FIGS. 4-5 show an example of the interface between the socket 104 and the lock collar 102. The lock collar 102 is constructed as a lock collar sub-assembly 250, in the illustrated example.

The lock collar 102 shown in FIGS. 2-3 includes sections 200, 201, and 202 that are threadingly attached to one another, in the illustrated example. These threaded sections enable efficiency assembly and disassembly of the lock collar. However, other removable attachment techniques for the lock collar section have been contemplated. The structure of the lock collar sub-assembly 250 does not demand clocking between the sections 200, 201, and 202.

FIGS. 4-5 show the features of the end-effector that retain and assist in locking and unlocking the socket 104. Specifically, FIGS. 4-5 show an end 402 of the socket 104, the spring 132, and the bearings 121. FIG. 4 shows the end-effector in the unlocked configuration where the socket 104 is able to rotate with regard to the lock collar 102 and FIG. 5 conversely depicts the end-effector in the locked configuration where the socket 104 is angularly locked in relation to the lock collar 102.

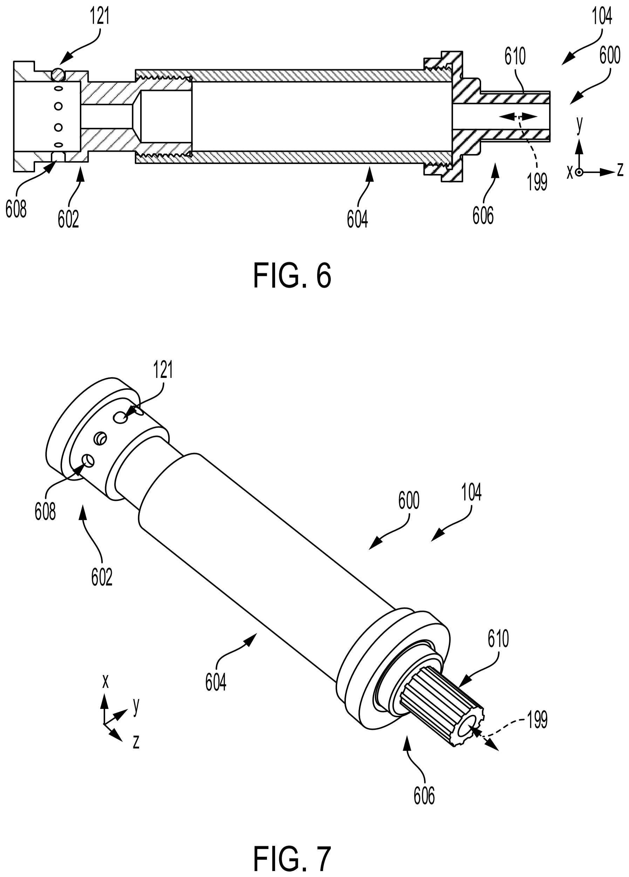

FIGS. 6-7 depict the socket 104 that is formed as a sub-assembly 600 that includes a sections 602, 604, and 606. The section 602 includes recesses 608 for the bearings 121. Further, the sections 606 includes splines 610 that allow the clutch plates to be coupled thereto such that they may axially translate to enable clutch engagement and disengagement while inhibiting rotation of the plates in relation to the socket.

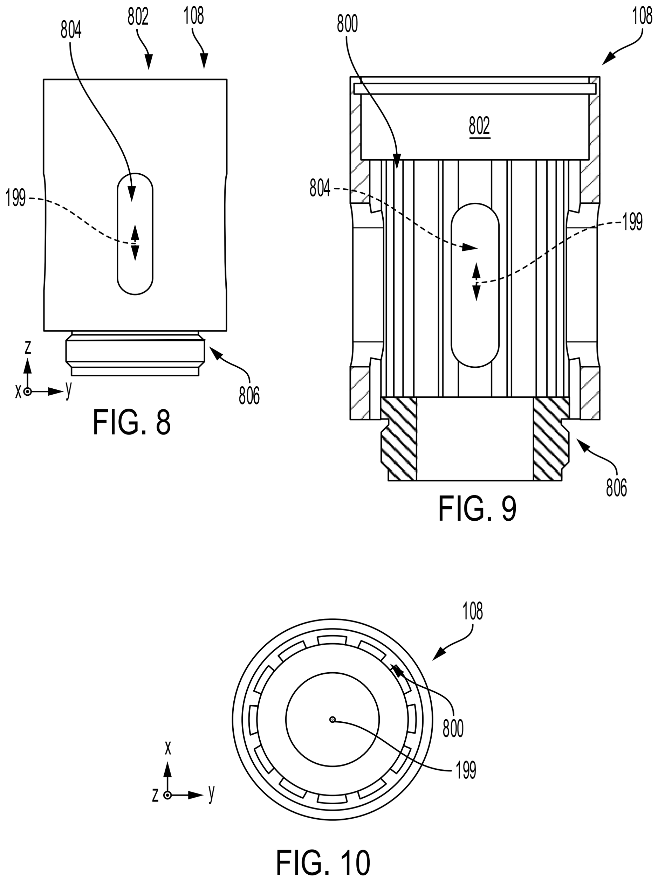

FIG. 8-10 show detailed views of the body 108. Splines 800 that allow the plates in the clutch mechanism to be coupled thereto, as discussed in greater detail herein. A counterbore 802 for the socket to seat in is further depicted in FIGS. 9-10. Further, a slot 804 for lock collar actuation is further included in the body 108, in the illustrated example. The body 108 additionally includes threads 806 for quick connection to a tool such as a quick-change tool.

FIGS. 11-12 show different sections of the clutch mechanism 101 in the body 108 and the socket 104, respectively. Specifically, the clutch plates 122 are shown in FIG. 11. The clutch plates 122 includes spline 1100 (e.g., external splines) that are in splined engagement with the splines 800 in the body 108. As such, the plates 122 are able to axially slide with regard to the body but restrained from rotation in relation to the body that is fixed.

FIG. 12 shows the socket 104 with splines 1200 (e.g., internal splines) in the clutch plates 124 that mate with the splines 610 in the socket to again allow the plates to slide with regard to the socket but are restrained from rotating in relation to the socket. However, it will be understood that the clutch plates 124 and the socket 104 are able to jointly rotate when the clutch is disengaged. The clutch plates 122 and 124, when the clutch mechanism 101 is assembled, are interleaved in a stack.

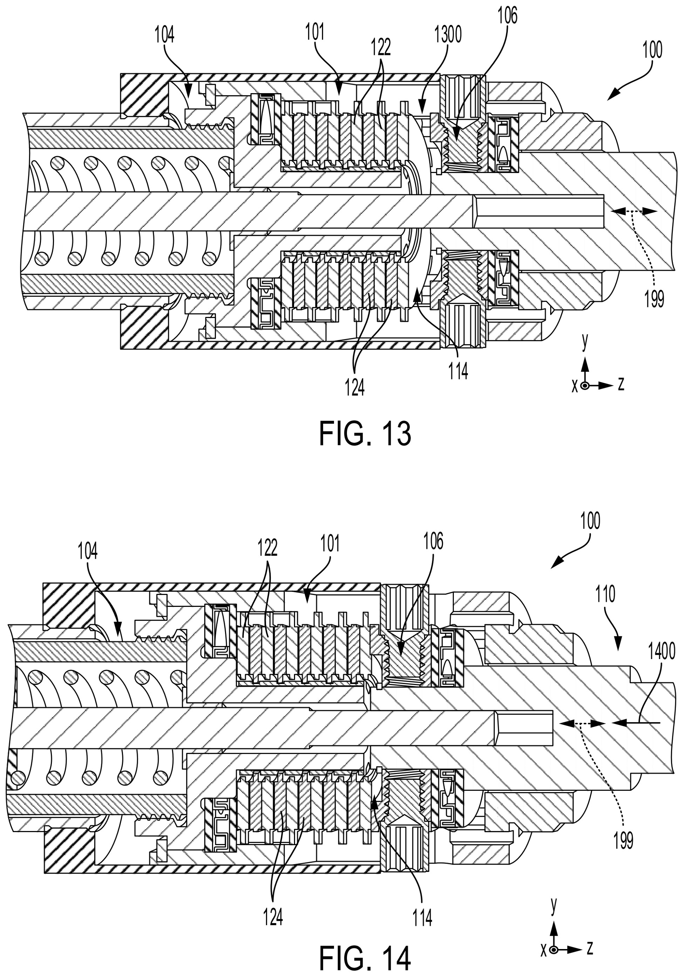

FIGS. 13-14 show the clutch mechanism 101 in an assembled configuration in the end-effector 100. FIG. 13 specifically shows the clutch mechanism 101 in a disengaged configuration that places the end-effector 100 in an unlocked configuration. When the clutch is disengaged, a gap 1300 is formed between the drive thrust bearing 106 and the clutch plates 114. As such, the sets of clutch plates 122 and 124 are frictionally decoupled in FIG 13.

In FIG. 14, the drive shaft 110 is pushed in axial direction 1400 to move the thrust bearing 106 into contact with the clutch plates 114 such that the sets of clutch plates 122 and 124 frictionally engage to inhibit rotation of the socket 104.

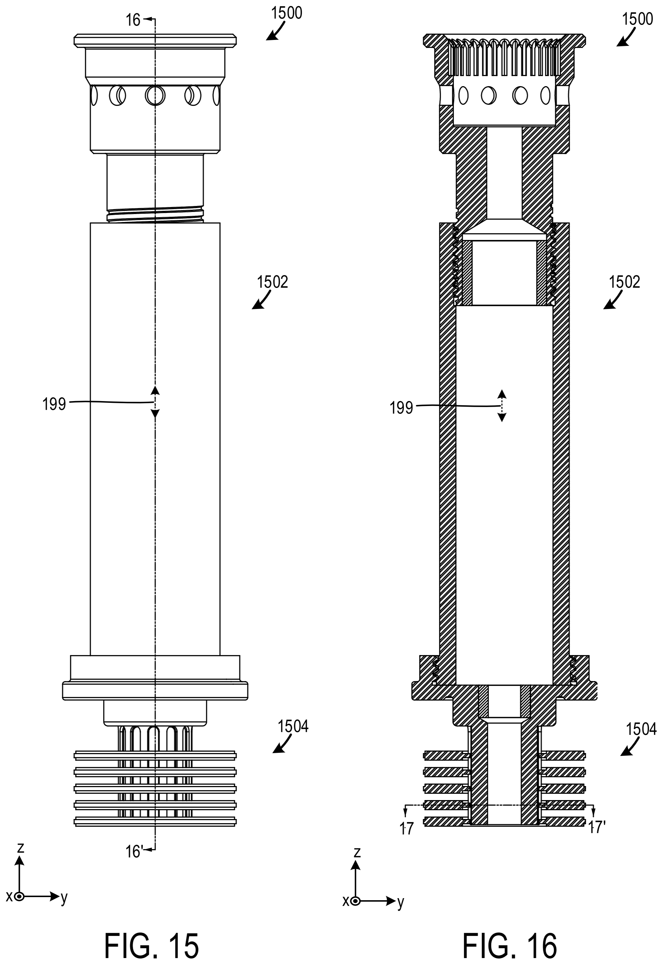

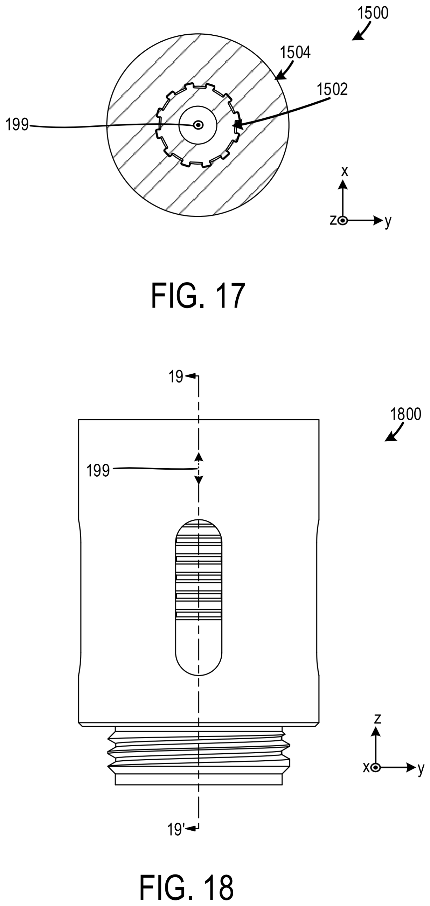

FIGS. 15-16 show another example of an end-effector 1500 with a socket 1502 that includes a set of clutch plates 1504 that are included in a clutch mechanism. The cutting plane 16-16' denoting the location of the cross-sectional view of FIG. 16 is illustrated in FIG. 15. Further, the cutting plane 17-17' denoting the location of the cross-sectional view of FIG. 17 is illustrated in FIG. 16.

FIG. 17 shows a detailed view of the splined engagement between the sect of clutch plates 1504 and a splined section of the socket 1502. Further, the cutting plane 18-18' denoting the location of the cross-sectional view of FIG. 18 is illustrated in FIG. 17.

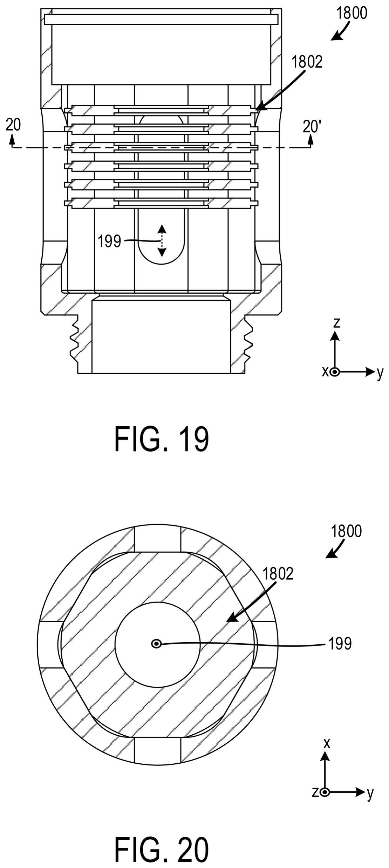

FIGS. 18-20 show views of a body 1800 and a set of clutch plates 1802 that are in splined engagement therewith. Further, the cutting plane 20-20' denoting the location of the cross-sectional view of FIG. 20 is illustrated in FIG. 19.

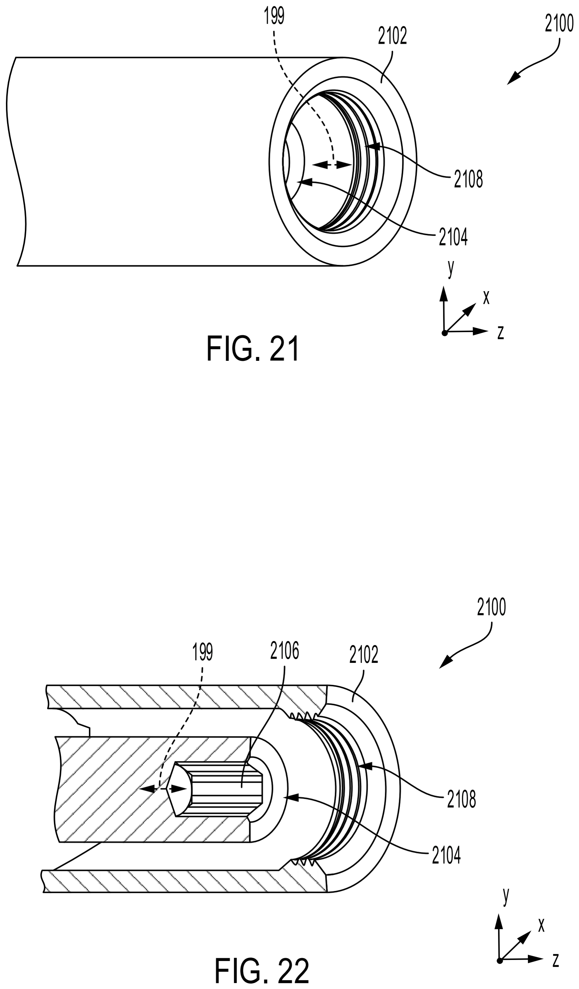

FIGS. 21-22 show a robotic component 2100 that may be connected to or included in any of the end-effectors described herein. The robotic component 2100 includes a threaded housing 2102 and a drive mechanism 2104. To elaborate, threaded housing 2102 may be configured to mate with a housing of the end-effector and the drive mechanism 2104 may be configured to interact with the drive shaft via a polygonal section 2106 (e.g., a hexagonal section). The polygonal section 2106 is specifically depicted as a recess. However, the polygonal section may be configured as a male driver, in alternate embodiments. The threaded housing 2102 may include a threaded section 2108 that is configured to threadingly engage a threaded section of the end-effector housing. The robotic component 2100 may be configured to attach to a drive shaft of the end-effector. The drive mechanism 2104 may be driven in rotation and displaced axially via other robotic system componentry to provide the operating forces for end-effector operation. It will be appreciated that the robotic component 2100 may have a variety of structures that allow it to interface with upstream robotic system componentry.

FIGS. 23-24 depicted an exemplary fastener 2300 which may be used in conjunction with any of the end-effectors described herein. However, the end-effectors described herein may be used with a variety of suitable fasteners. The fastener 2300 include a stud 2302, an auxiliary structure 2304, a sleeve 2306, and a collet body 2308.

In the illustrated example, a surface 2310 of the auxiliary structure 2304 function as an upper clamping arm and feet 2312 of the collet body 2308 function as a lower clamping arm for workpieces 2314 and 2316. The stud 2302 and the auxiliary structure 2304 include tooling interfaces 2318 and 2320, respectively. In the illustrated example, the tooling interface 2318 is in the form of a recess and the tooling interface 2320 is an external polygonal interface (e.g., head). However, a variety of suitable tooling (e.g., end-effector) interfaces have been contemplated. Further, in other examples, the end-effector may be configured to manipulate (e.g., adjust, rotate, hold stationary, etc.) a single tooling interface in the fastener or more than two tooling interfaces in the fastener.

FIGS. 1A-24 provide for a method for operating an end-effector. The method may be implemented by any of the end-effectors and robotic machines or combinations of the end-effectors and robotic machines described above with regard to FIGS. 1-20. However, in other examples, the method may be implemented by other suitable end-effectors and/or robotic machines. Still further, at least a portion of the method steps may be manually implemented via manufacturing personnel, in some instances. The method includes clocking the socket to the fastener body. It will be understood that the end-effectors described herein allow for continuous clocking of the socket in relation to the fastener body. Thus, the angle between the socket and the fastener body may be continuously adjusted as opposed to discrete step-wise adjustment, if desired. Next, the method includes applying a downward force to the drive shaft to inhibit rotation of the socket with regard to the body. Next, the method includes rotating the drive shaft to induce clamping of the fastener. This method allows the end-effector to be efficiently and robotically clocked to the fastener body, if desired, thereby increasing customer appeal.

FIGS. 1A-24 are drawn approximately to scale, aside from the schematically depicted components. However, other relative component dimensions may be used, in other embodiments.

FIGS. 1A-24 show example configurations with relative positioning of the various components. If shown directly contacting each other, or directly coupled, then such elements may be referred to as directly contacting or directly coupled, respectively, at least in one example. Similarly, elements shown contiguous or adjacent to one another may be contiguous or adjacent to each other, respectively, at least in one example. As an example, components laying in face-sharing contact with each other may be referred to as in face-sharing contact. As another example, elements positioned apart from each other with only a space there-between and no other components may be referred to as such, in at least one example. As yet another example, elements shown above/below one another, at opposite sides to one another, or to the left/right of one another may be referred to as such, relative to one another. Further, as shown in the figures, a topmost element or point of element may be referred to as a "top" of the component and a bottommost element or point of the element may be referred to as a "bottom" of the component, in at least one example. As used herein, top/bottom, upper/lower, above/below, may be relative to a vertical axis of the figures and used to describe positioning of elements of the figures relative to one another. As such, elements shown above other elements are positioned vertically above the other elements, in one example. As yet another example, shapes of the elements depicted within the figures may be referred to as having those shapes (e.g., such as being circular, straight, planar, curved, rounded, chamfered, angled, or the like). Further, elements shown intersecting one another may be referred to as intersecting elements or intersecting one another, in at least one example. Further still, an element shown within another element or shown outside of another element may be referred as such, in one example. An elements inner and outer diameter may be referred to as such. Further an element with a smaller or greater diameter than another element may be referred to as such. Elements arranged circumferential to or offset from one another may be referred to as such.

The invention will further be described in the following paragraphs. In one aspect, an end-effector is provided that comprises a clutch mechanism configured to: in an unlocked configuration, permit rotation between a body and a socket in response to an absence of a force applied to a drive shaft; and in a locked configuration, inhibit rotation between the body and the socket in response to a force applied to the drive shaft; wherein the clutch mechanism includes: a first set of plates that are coupled to the body; and a second set of plates that are coupled to the socket. In one example, the first set of plates may be splined to the body. In another example, the second set of plates may be splined to the socket. In another example, the end-effector may further comprise a thrust bearing positioned axially between a portion of the drive shaft and the first and second sets of clutch plates. In another example, the end-effector may further comprise a spring positioned between an end of the socket and an interior section of the body, wherein the spring is configured to push a lock collar back to an unlocked position, wherein the lock collar at least partially circumferentially surrounds the socket. In another example, the end-effector may further comprise a plurality of bearings that mate with recesses in the lock collar and configured to selectively lock a fastener into the lock collar. In one example, the plurality of bearings may lock the fastener into the lock collar in response to an axial force applied to the lock collar. In one example, the plurality of bearings may be circumferentially arranged around the lock collar.

In another aspect, a method for operation of an end-effector is provided that comprises clocking a socket to a fastener body; and applying an axial force to the drive shaft to engage a clutch mechanism to lock rotation of the socket; wherein the end-effector includes the clutch mechanism that has a first set and a second set of interleaved plates. In one example, the end-effector may include a plurality of bearings that mate with recesses in the lock collar and configured to selectively lock a fastener into the lock collar; and the plurality of bearings may lock the fastener into the lock collar in response to an axial force. In one example, the first set of plates may be splined to the body; and the first set of plates may be splined to the socket. In one example, the end-effector may further comprise a thrust bearing positioned axially between a portion of the drive shaft and the first and second sets of clutch plates. In another example, the end-effector may further comprise a self-lubricating bushing arranged between the socket and the drive shaft.

In another aspect, an end effector is provided that comprises a clutch mechanism configured to: in an unlocked configuration, permit rotation between a body and a socket in response to an absence of a force applied to a drive shaft; and in a locked configuration, inhibit rotation between the body and the socket in response to a force applied to the drive shaft; a thrust bearing positioned axially between a portion of the drive shaft and the first and second sets of clutch plates; and a lock collar configured to receive a fastener; wherein the clutch mechanism includes: a first set of friction plates that are coupled to the body; and a second set of friction plates that are coupled to the socket. In one example, the end-effector may further comprise a self-lubricating bushing arranged circumferentially between the socket and the drive shaft. In one example, the end-effector may further comprise a spring configured to exert a return force on the lock collar. In another example, the first set of plates may be splined to the body; and the second set of plates may be splined to the socket. In one example, the thrust bearing may be enclosed by the body. In one example, the end-effector may further comprise a plurality of bearings that mate with recesses in the lock collar and configured to selectively lock a fastener into the lock collar. In one example, the plurality of bearings may lock the fastener into the lock collar in response to an axial force applied to the lock collar; and the plurality of bearings may be circumferentially arranged around the lock collar.

Note that the example control and estimation routines included herein can be used with various fastener configurations. The control methods and routines disclosed herein may be stored as executable instructions in non-transitory memory and may be carried out by a tooling apparatus. However, it will be appreciated that at least a portion of the method steps may be manually implemented via installation personnel.

The specific routines described herein may represent one or more of any number of processing strategies such as event-driven, interrupt-driven, multi-tasking, multi-threading, and the like. As such, various actions, operations, and/or functions illustrated may be performed in the sequence illustrated, in parallel, or in some cases omitted. Likewise, the order of processing is not necessarily required to achieve the features and advantages of the example embodiments described herein, but is provided for ease of illustration and description. One or more of the illustrated actions, operations and/or functions may be repeatedly performed depending on the particular strategy being used. Further, the described actions, operations and/or functions may graphically represent code to be programmed into non-transitory memory of the computer readable storage medium in the end-effector and/or tooling apparatus, where the described actions are carried out by executing the instructions in a tooling apparatus and an end-effector which includes various components.

It will be appreciated that the configurations and routines disclosed herein are exemplary in nature, and that these specific embodiments are not to be considered in a limiting sense, because numerous variations are possible. For example, the above technology can be applied to a broad range of manufacturing fields such as the aerospace industry, the construction industry, the maritime industry, etc. The subject matter of the present disclosure includes all novel and non-obvious combinations and sub-combinations of the various systems and configurations, and other features, functions, and/or properties disclosed herein.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A method for operation of an end-effector, comprising:
clocking a socket to a fastener body; and
applying an axial force to a drive shaft to engage a clutch mechanism to lock rotation of the socket;
wherein the end-effector includes:
the clutch mechanism that has a first set and a second set of interleaved plates.

2. The method of claim 1, wherein:
the end-effector includes a plurality of bearings that mate with recesses in a lock collar and configured to selectively lock a fastener into the lock collar; and
the plurality of bearings lock the fastener into the lock collar in response to an axial force.

3. The method of claim 1, wherein:
the first set of plates is splined to a body; and
the first set of plates is splined to the socket.

4. The method of claim 3, wherein the end-effector further comprises a thrust bearing positioned axially between a portion of the drive shaft and the first and second sets of clutch plates.

5. The method of claim 1, wherein the end-effector further comprises a self-lubricating bushing arranged between the socket and the drive shaft.

6. An end-effector, comprising:
a clutch mechanism configured to:
in an unlocked configuration, permit rotation between a body and a socket in response to an absence of a force applied to a drive shaft; and
in a locked configuration, inhibit rotation between the body and the socket in response to a force applied to the drive shaft;
wherein the clutch mechanism includes:
a first set of plates that are coupled to the body; and
a second set of plates that are coupled to the socket.

7. The end-effector of claim 6, wherein the first set of plates is splined to the body.

8. The end-effector of claim 6, wherein the second set of plates is splined to the socket.

9. The end-effector of claim 6, further comprising a thrust bearing positioned axially between a portion of the drive shaft and the first and second sets of clutch plates.

10. The end-effector of claim 6, further comprising a spring positioned between an end of the socket and an interior section of the body, wherein the spring is configured to push a lock collar back to an unlocked position, wherein the lock collar at least partially circumferentially surrounds the socket.

11. The end-effector of claim 6, further comprising a plurality of bearings that mate with recesses in a lock collar and configured to selectively lock a fastener into the lock collar.

12. The end-effector of claim 11, wherein the plurality of bearings lock the fastener into the lock collar in response to an axial force applied to the lock collar.

13. The end-effector of claim 11, wherein the plurality of bearings are circumferentially arranged around the lock collar.

14. The end-effector of claim 11, further comprising:
a self-lubricating bushing arranged circumferentially between the socket and the drive shaft; and/or
a spring configured to exert a return force on the lock collar.

15. The end-effector of claim 11, further comprising a plurality of bearings that mate with recesses in the lock collar and configured to selectively lock the fastener into the lock collar; and wherein:
the plurality of bearings lock the fastener into the lock collar in response to an axial force applied to the lock collar; and
the plurality of bearings are circumferentially arranged around the lock collar.
